(19) Europäisches Patentamt
European Patent Office
Office européen des brevets

(11) **EP 4 300 873 A1**

(12) **EUROPÄISCHE PATENTANMELDUNG**

(43) Veröffentlichungstag:
**03.01.2024  Patentblatt 2024/01**

(51) Internationale Patentklassifikation (IPC):
*H04L 9/00* (2022.01)

(21) Anmeldenummer: **22182363.6**

(52) Gemeinsame Patentklassifikation (CPC):
**H04L 9/008;** H04L 2209/34

(22) Anmeldetag: **30.06.2022**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Mobility GmbH
81739 München (DE)**

(72) Erfinder: **BRABAND, Jens
38106 Braunschweig (DE)**

(74) Vertreter: **Siemens Patent Attorneys
Postfach 22 16 34
80506 München (DE)**

(54) **VERFAHREN ZUR DATENVERARBEITUNG IN EINER RECHENUMGEBUNG MIT VERTEILTEN COMPUTERN UND BAHNTECHNISCHE APPLIKATION**

(57)    Die Erfindung betrifft ein Verfahren zur Datenverarbeitung in einer Rechenumgebung mit verteilen Computern (CC1, CC2, HC), bei dem von einem Clientcomputer (CC1, CC2) zu verarbeitende Daten homomorph verschlüsselt an einen Hostcomputer (HC) übertragen werden, die zu verarbeitenden Daten homomorph verschlüsselt durch den Hostcomputer verarbeitet werden und die verarbeiteten Daten homomorph verschlüsselt von dem Hostcomputer an den Clientcomputer übertragen werden. Erfindungsgemäß ist vorgesehen, dass die zu verarbeitenden Daten vor dem homomorphen Verschlüsseln zusätzlich codiert werden, sowohl die codierten zu verarbeitenden Daten als auch die uncodierten zu verarbeitenden Daten homomorph verschlüsselt werden und an den Hostrechner übertragen werden, anschließend sowohl die codierten zu verarbeitenden Daten als auch die uncodierten zu verarbeitenden Daten homomorph verschlüsselt durch den Hostcomputer verarbeitet werden und anschließend sowohl die codierten verarbeiteten Daten als auch die uncodierten verarbeiteten Daten homomorph verschlüsselt von dem Hostcomputer an den Clientcomputer übertragen werden. Hierdurch entsteht vorteilhaft die Möglichkeit, die Daten durch Vergleich der beiden Ergebnisse, also dem Ergebnis der homomorph verschlüsselten und codierten Daten und dem Ergebnis der nur homomorph verschlüsselten Daten einen Nachweis für deren Integrität zu führen. Zusätzlich sind bahntechnische Applikationen und ein Computerprogramm unter Schutz gestellt.

FIG 1

EP 4 300 873 A1

**Beschreibung**

Die Erfindung betrifft ein Verfahren zur rechnergestützten Datenverarbeitung in einer Rechenumgebung mit verteilten Computern, bei dem

- von einem Clientcomputer zu verarbeitende Daten homomorph verschlüsselt an einen Hostcomputer übertragen werden,
- anschließend die zu verarbeitenden Daten homomorph verschlüsselt durch den Hostcomputer verarbeitet werden,
- anschließend die verarbeiteten Daten homomorph verschlüsselt von dem Hostcomputer an den Clientcomputer übertragen werden.

Außerdem betrifft die Erfindung streckenseitige Einrichtung für eine Bahnanlage und ein insbesondere spurgeführtes Fahrzeug. Zuletzt betrifft die Erfindung ein Computerprogrammprodukt, wobei das Computerprogrammprodukt mit Programmbefehlen zur Durchführung dieses Verfahrens ausgestattet ist.

Auch sichere Berechnungen sollen zukünftig in der Cloud stattfinden, wobei möglicherweise die Daten vertraulich sein könnten, z. B. weil sie von verschiedenen Wettbewerbern stammen, die z. B. Daten aggregieren wollen, ihre Rohdaten aber nicht offenlegen wollen, z. B. bei der zustandsorientierten Wartung von Bahnanlagen. Das Gesamtergebnis soll allen autorisierten Nutzern zur Verfügung stehen, aber dabei verlässlich und fälschungssicher sein.

Sicherheit ist im Zusammenhang mit dieser Erfindung im Sinne von Betriebssicherheit (im Folgenden auch Safety) und Übertragungssicherheit (Im folgenden auch Security) gemeint. Betriebssichere Berechnungen sind beispielsweise im Bahnbetrieb erforderlich. Das Auftreten von Fehlern soll im Interesse eines sicheren Betriebs möglichst gering sein. Bei Nutzung einer Cloud muss aber auch die Übertragungssicherheit gewährleistet sein.

Methoden der homomorphen Verschlüsselung zur Gewährleistung der Übertragungssicherheit sind seit längerem bekannt aber erst seit kurzem schnell genug, dass an einen praktischen Einsatz gedacht werden kann. Hiermit könnten theoretisch komplett vertrauliche Berechnungen auf verschlüsselten Daten stattfinden, aber die Verlässlichkeit ist dabei nicht gesichert, da homomorphe Verfahren durch ihre Konstruktion immer manipulierbar sind (sog. Malleability) und hierdurch entsteht wiederum ein Sicherheitsproblem (Safta und Security).

Unter Malleability wird eine mögliche Eigenschaft von kryptographischen Algorithmen verstanden. Eine Verschlüsselung gilt als "malleable", falls es möglich ist, einen Geheimtext ohne Kenntnis des Klartextes und des Schlüssels derart zu ändern, dass es bei der Entschlüsselung zu einer spezifischen Änderung des Klartextes führt. Im Allgemeinen ist dies eine unerwünschte Eigenschaft, die verschiedene Angriffe und Fehler ermöglicht. Es wird daher auch vom gegensätzlichen Attribut Non-Malleability gesprochen, wenn diese Eigenschaft nicht besteht.

Eine homomorphe Verschlüsselung verfügt über homomorphe Eigenschaften, wodurch sich Berechnungen auf dem Geheimtext durchführen lassen, die mathematischen Operationen auf den entsprechenden Klartexten entsprechen, ohne den Klartext zu kennen oder zu entschlüsseln. Mit Hilfe homomorpher Kryptographie lassen sich Berechnungen auf verschiedene Systeme (z. B. Server) verteilen, die einander nicht vertrauen. Verschlüsselte Daten werden beispielsweise in einer Cloud abgelegt. Dort können sie durchsucht oder verarbeitet werden, ohne sie zu entschlüsseln. Das Ergebnis wird verschlüsselt zurückgesendet. Der Cloud-Anbieter kennt dadurch weder die Daten noch die Ergebnisse.

Es gibt eine Reihe von Kryptosystemen, die zumindest partiell homomorphe Verschlüsselung bei annehmbarem Aufwand erlauben. Darüber hinaus existieren auch voll-homomorphe Verschlüsselungssysteme, die jedoch auf Grund ihrer komplexen Gestalt und Rechenintensität bislang keine Verwendung finden. Beispiele für homomorphe Verschlüsselungssysteme sind:

- Goldwasser-Micali-Kryptosystem
- Benaloh-Kryptosystem
- Paillier-Kryptosystem
- Okamoto-Uchiyama-Kryptosystem

Allgemein ist eine Verschlüsselung v bez. einer Operation + homomorph, wenn gilt (hier für die Rechenoperation Plus dargestellt)

$$v(a) \ \oplus \ v(b) \ = \ v(a \ + \ b)$$

D. h. man kann die Operation auf den verschlüsselten Daten v(a) und v(b) ausführen und nur wer

entschlüsseln kann, weiß das unverschlüsselte Ergebnis e = a+b. Generell braucht man aber noch viele

weitere homomorphe Operationen, um ein sinnvolles System aufsetzen zu können.

Ein einfaches Beispiel ist das one-time-pad, wo die Verschlüsselung aus dem XOR (Operation exklusives Oder) mit einem Schlüssel k besteht. An diesem einfachen Beispiel lässt sich das Problem der Malleability erläutern. Selbst wenn v(a) unbekannt ist, könnte ein Angreifer v(a) mit einem Fehler f verXORen, d. h. statt v(a) dann v(a) XOR f weiterleiten, und bei der Entschlüsselung erhält man dann a XOR f als Ergebnis, ohne dass der Angreifer a kennen musste. Da sich aber einfache Fehler wie Bitkipper etc auch als XOR mit einem Fehler f darstellen lassen, kann solch ein Fehler auch zufällig auftreten.

Lösungsvorschläge für diese Problem finden sich beispielsweise im Indian Journal of Science and Technology, Vol 9(29), DOI: 10.17485/ijst/2016/v9i29/90783, August 2016. Die vorgeschlagenen Lösungen sind kryptographischer Natur, d. h. sie brauchen zusätzliche Schlüssel, Krypto-Algorithmen oder sogar Blockchains. Hierdurch entsteht ein beträchtlicher Rechenaufwand.

Die Aufgabe der Erfindung eine die homomorph verschlüsselte Verarbeitung durch einen Hostcomputer durch ein Verfahren, eine streckenseitige Einrichtung des Bahnbetriebs oder ein insbesondere spurgeführtes Fahrzeug zu ermöglichen, bei der mit überschaubaren Rechenaufwand ein Integritätsschutz für die zu verarbeitenden beziehungsweise verarbeiteten Daten realisiert ist. Außerdem besteht die Aufgabe der Erfindung darin, ein Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass

- die zu verarbeitenden Daten vor dem homomorphen Verschlüsseln zusätzlich codiert werden,
- sowohl die codierten zu verarbeitenden Daten als auch die uncodierten zu verarbeitenden Daten homomorph verschlüsselt werden und an den Hostrechner übertragen werden,
- anschließend sowohl die codierten zu verarbeitenden Daten als auch die uncodierten zu verarbeitenden Daten homomorph verschlüsselt durch den Hostcomputer verarbeitet werden,
- anschließend sowohl die codierten verarbeiteten Daten als auch die uncodierten verarbeiteten Daten homomorph verschlüsselt von dem Hostcomputer an den Clientcomputer übertragen werden.

Zu verarbeitende Daten stellen somit für den Hostcomputer stellt einen Input dar und die verarbeiteten Daten einen Output. Der Hostcomputer führt somit eine Aufgabe mit Operatoren aus, und dies ist der Service, der beispielsweise in einer Cloudumgebung, der der Hostcomputer angehört, angeboten wird.

Die Verarbeitung im Hostcechner erfolgt mit homomorph verschlüsselten Daten. Mit anderen Worten werden die zu verarbeitenden Daten homomorph verschlüsselt an den Host Computer übertragen und dort nicht entschlüsselt, sondern homomorph verschlüsselt verarbeitet. Auch die Rücksendung erfolgt homomorph verschlüsselt. Mit anderen Worten erfolgt eine Entschlüsselung der homomorph verschlüsselten Daten (der verarbeiteten Daten) nur auf dem Client Computer oder einer mit dem Clientcomputer verbundenen sicheren Umgebung. Auch die Verschlüsselung der zu verarbeitenden Daten erfolgt durch den Clientcomputer.

Erfindungsgemäß sollen somit spezielle Lösungen vorgeschlagen werden, die erfindungsgemäß Eigenschaften von Safety-Mechanismen ausnutzen (die bei Safety-relevanten Anwendungen wie Bahnanwendungen sowieso gebraucht werden) und mit möglichst wenig Overhead auskommen.

Man muss davon ausgehen, dass ein Angreifer das komplette Verfahren kennt, also auch die homomorphe Verschlüsselung sowie alle Operationen, nur den konkret verwendeten Schlüssel nicht (Kerckhoff'sches Prinzip). Bei der Verarbeitung auf dem Server oder in der Cloud muss man zwar nicht von

konkreten Angriffen ausgehen, aber alle Fehlermodi berücksichtigen (zufällige Fehler wie Bitkipper usw.).

Erfindungsgemäß ist vorgesehen, zusätzlich zu den Berechnungen, die auf den Daten a und b laufen, zusätzliche Berechnungen zu verlangen, die auf codierten Daten c(a) und c(b) laufen. Der Codierungsalgorithmus c ist von dem homomorphen Verschlüsselungsalgotithmus v verschieden und dabei idealerweise nicht homomorph (damit der Angreifer nicht auch hier die Malleability homomorpher Algorithmen ausnutzen kann), alternativ könnte man c wenigstens geheim halten, falls c auch homomorph ist. Dann kann der Angreifer zumindest mit einer hohen Wahrscheinlichkeit nicht die Daten und die Codes zueinander passend verfälschen. Dies könnte z. B. durch eine Permutation oder ähnlichen Transformation der Daten erfolgen.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder auch als Messwerte. Die erforderlichen Anweisungen Programmbefehle sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten und/oder Softwarekomponenten über Schnittstellen.

Gemäß einer Ausgestaltung der Erfindung ist vorgesehen, dass

- sowohl die codierten verarbeiteten Daten als auch die uncodierten verarbeiteten Daten nach der Übertragung an den Clientcomputer entschlüsselt werden und die entschlüsselten codierten Daten zusätzlich decodiert werden,
- die entschlüsselten sowie decodierten verarbeiteten Daten und die entschlüsselten verarbeiteten Daten auf Übereinstimmung geprüft werden.

Ist im Rahmen dieser Erfindung von entschlüsselten verarbeiteten Daten die Rede, so handelt es sich um diejenigen, die vorher nicht codiert waren, sondern nur homomorph verschlüsselt. Ist im Rahmen dieser Erfindung von entschlüsselten sowie die codierten verarbeiteten Daten die Rede, so handelt es sich um diejenigen, die während der Verarbeitung codiert und homomorph verschlüsselt waren.

Da die Daten erst nach der Verarbeitung durch den Host Computer entschlüsselt und erforderlichenfalls die codiert werden, ist es möglich, dass z. B. in einer Cloud Rechenoperationen ausgeführt werden können, ohne dass der Cloudanbieter die Daten kennt, und der Anwender kann anhand seiner Codierung nach der Entschlüsselung nun vorteilhaft prüfen, ob in der Cloud richtig gerechnet wurde, indem er nachprüft ob das zurückgelieferte $c(e2) = c(a+b)$ kompatibel mit dem errechneten Ergebnis $e1 = a+b$ ist, d. h. $e1 = e2$ ist. Das lohnt sich natürlich nur, wenn die in der Cloud ausgeführte Operation $\oplus$ wesentlich komplexer ist als die Verschlüsselung $v$ und die Codierung $c$. In der Praxis wird dies dann der Fall sein, wenn mit den Daten eine Vielzahl von Operationen durchgeführt werden soll und nicht nur eine Operation, wie dies vorstehend zur Verdeutlichung des Prinzips erläutert wurde.

Gemäß einer Ausgestaltung der Erfindung ist vorgesehen, dass nach der Prüfung der entschlüsselten sowie decodierten verarbeiteten Daten und der entschlüsselten Daten auf Übereinstimmung ein Prüfergebnis generiert wird.

Das Prüfungsergebnis kann vorteilhaft dazu genutzt werden, um Prozesse in der Sphäre des Clients, insbesondere Prozesse, die in dem Client Computer laufen, zu beeinflussen. Insbesondere kann reagiert werden, wenn eine Übereinstimmung der Ergebnisse nicht vorliegt, weil dies darauf schließen lässt, dass ein Fehler bei der Verarbeitung der Daten aufgetreten ist oder ein Angriff auf die ausführende Rechenumgebung ausgeübt wurde, der zu einer Verfälschung der Daten im bereits beschriebenen Sinne geführt hat.

Gemäß einer Ausgestaltung der Erfindung ist vorgesehen, dass ein Fehlersignal erzeugt wird, wenn das Prüfergebnis den Inhalt hat, dass die entschlüsselten sowie decodierten verarbeiteten Daten und die entschlüsselten Daten nicht übereinstimmen.

Ein Fehlersignal kann vorteilhaft für eine weitere Datenverarbeitung genutzt werden. Dieses ist beispielsweise durch den Client Computer auswertbar. Ein Fehlersignal bedeutet im Zusammenhang mit dieser Erfindung lediglich, dass eine Übereinstimmung der verglichenen Ergebnisse nicht vorliegt und daher mindestens eines der Ergebnisse falsch sein muss. Der Grund kann sein, dass ein Fehler bei der Verarbeitung der Daten aufgetreten ist oder ein Angriff auf die ausführende Rechenumgebung ausgeübt wurde, der zu einer Verfälschung der Daten im bereits beschriebenen Sinne geführt hat.

Gemäß einer Ausgestaltung der Erfindung ist vorgesehen, dass Daten derart codiert werden, dass für die zu verarbeitenden codierten und verschlüsselten Daten dieselben Operatoren verwendet werden können, wie für die zu verarbeitenden nur verschlüsselten Daten.

Gemäß dieser Ausgestaltung der Erfindung wählt man c so, dass die Operation ⊕ auch für die codierten Daten c(a) und c(b) sinnvoll ist, d. h. dass bei Verwendung der codierten Daten nach Decodierung des Resultates dasselbe Resultat herauskommt wie bei Verwendung der nicht codierten Daten.

Gemäß einer Ausgestaltung der Erfindung ist vorgesehen, dass für die zu verarbeitenden codierten und verschlüsselten Daten angepasste Operatoren verwendet werden, die dasselbe Ergebnis generieren wie die jeweils zugehörigen Operatoren bei den zu verarbeitenden nur verschlüsselten Daten.

Gemäß dieser Ausgestaltung der Erfindung muss man die Operation entsprechend abändern (⊕ '), so dass mit der Codierung verträgliche Resultate herauskommen, die dann mit dem Resultat der Operation der nicht codierten Daten verglichen werden kann.

Die genannte Aufgabe wird alternativ mit dem eingangs angegebenen Anspruchsgegenstand (Clientcomputer) erfindungsgemäß auch dadurch gelöst, dass dass der Clientcomputer dazu eingerichtet ist, ein Verfahren nach einem der vorangehenden Ansprüche clientseitig durchzuführen und dabei

- zu verarbeitende Daten homomorph zu verschlüsseln
- die zu verarbeitenden Daten vor dem homomorphen Verschlüsseln zusätzlich zu codieren,
- sowohl die codierten zu verarbeitenden Daten als auch die uncodierten zu verarbeitenden Daten homomorph zu verschlüsseln, und an eine Hostrechner zu übertragen,
- sowohl die codierten verarbeiteten Daten als auch die uncodierten verarbeiteten Daten homomorph verschlüsselt von dem Hostcomputer zu empfangen.

Die genannte Aufgabe wird alternativ mit dem eingangs angegebenen Anspruchsgegenstand (streckenseitige Einrichtung einer Bahnanlage, Fahrzeug, insbesondere spurgebundenes Fahrzeug) erfindungsgemäß auch dadurch gelöst, dass deses/diese einen Clientcomputer wie vorstehend beschrieben aufweist.

Mit den vorstehend genannten Vorrichtungen lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Vorrichtung.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Die Bereitstellung des Computerprogramms erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:

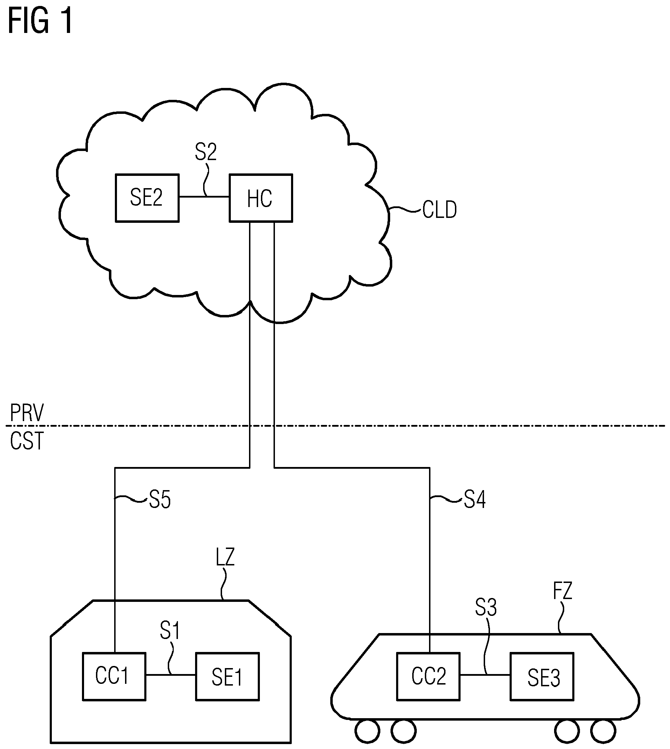

Figur 1 ein Ausführungsbeispiel einer Bahn-Infrastruktur mit der erfindungsbemäßen Rechenumgebung mit ihren Wirkzusammenhängen schematisch, wobei ein Ausführungsbeispiel einer Computer-Infrastruktur der der Rechenumgebung gemäß als Blockschaltbild gezeigt ist und wobei die einzelnen Funktionseinheiten Programmmodule enthalten, die jeweils in einem oder mehreren Prozessoren ablaufen können, so dass die Schnittstellen demgemäß softwaretechnisch oder hardwaretechnisch ausgeführt sein können,

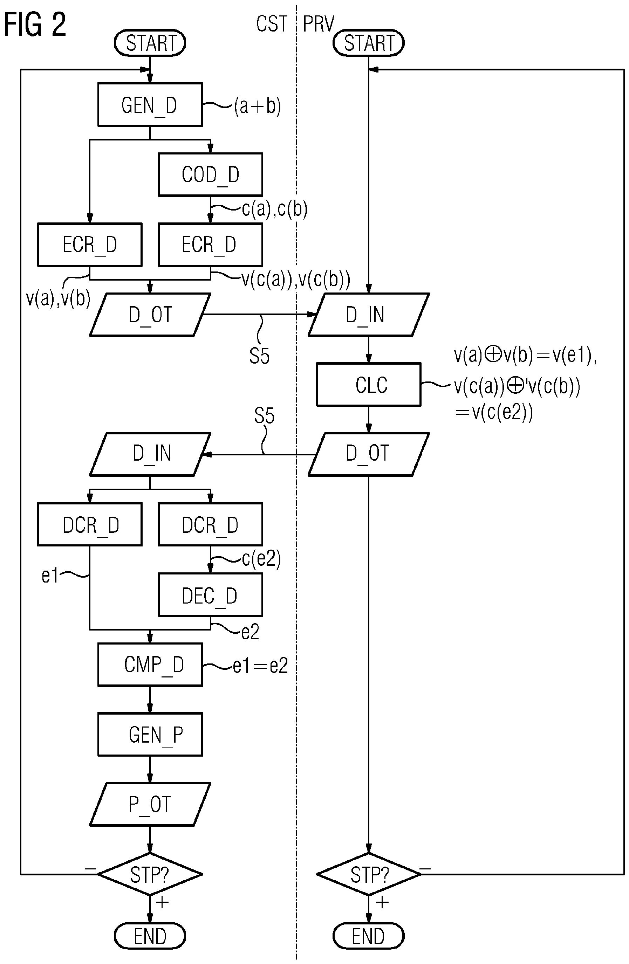

Figur 2 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind.

In Figur 1 ist eine Rechenumgebung dargestellt, die unterteilt ist in einen Provider PRV und einen Kunden CST (getrennt durch eine strichpunktierte Linie). der Provider bietet in einer Cloud CLD einen Dienst an, wobei exemplarisch in der Cloud CLD ein Hostcomputer HC dargestellt ist, der über eine zweite Schnittstelle S2 mit einer zweiten Speichereinheit SE2 verbunden ist.

Der Kunde CST betreibt eine Bahnanwendung. Diese ist exemplarisch durch eine Leitzentrale LZ mit einem Clientcomputer CC1 dargestellt, der über eine erste Schnittstelle S1 mit einer ersten Speichereinheit SE1 verbunden ist. Außerdem betreibt der Kunde ein Fahrzeug FZ, welches mit einem zweiten Clientcomputer CC2 ausgestattet ist und welcher über eine dritte Schnittstelle S3 mit einer dritten Speichereinrichtung SE3 verbunden ist. Der erste Client Computer CC1 ist über eine fünfte Schnittstelle S5 mit dem Hostcomputer HC verbunden und der zweite Clientcomputer CC2 über eine vierte Schnittstelle S4 ebenfalls mit dem Hostcomputer HC.

Der Figur 2 lässt sich nun der Verfahrensablauf entnehmen. Auch dieser ist in Verfahrensschritte unterteilt, die jeweils beim Kunden CST oder beim Provider PR V durchgeführt werden (getrennt durch eine strichpunktierte Linie. Dazu wird sowohl beim Kunden CST als auch beim Provider PRV zunächst das Verfahren gestartet.

Danach wird beim Kunden CST in einem Erzeugungsschritt für Daten GEN_D ein Datensatz erzeugt, der durch den Provider zu verarbeiten ist. Dieser besteht daher aus den zu verarbeitenden Daten. Diese werden repräsentativ durch die Buchstaben a und b dargestellt. Außerdem ist mit den Daten exemplarisch als Rechenoperation eine Addition durchzuführen. Dies ist in Figur zwei durch den Ausdruck (a + b) angedeutet.

In einem nächsten Schritt werden die zu verarbeitenden Daten parallel einmal in einem Codierungsschritt COD_D für Daten codiert und anschließend in einem Verschlüsselungsschritt ECR_D für die Daten verschlüsselt, wobei es sich um eine homomorphe Verschlüsselung handelt. In dem parallelen Schritt werden die Daten ebenfalls ohne einen Codierungsschritt sofort in dem Schritt ERC_D homomorph verschlüsselt.

Das Ergebnis der Codierung ist in Figur zwei als c(a) und c(b) angedeutet. Nach der homomorphen Verschlüsselung entstehen zum einen aus den nicht codierten Daten die verschlüsselten Daten v(a) und v(b). Aus den codierten Daten entstehen die verschlüsselten codierten Daten v(c(a)) und v(c(b)). Sowohl die verschlüsselten codierten Daten als auch die nur verschlüsselten Daten werden anschließend über die fünfte Schnittstelle S5 dem Provider zur Verfügung gestellt. Dies erfolgt in einem Ausgabeschritt für Daten D_OT auf Seite des Kunden CST und einem entsprechenden Eingabeschritt D_IN auf Seiten des Providers PRV.

Der Provider startet nun in einem Berechnungsschritt CRC die Datenverarbeitung. Dies ist ebenfalls in Figur 2 dargestellt. Es werden die Berechnungen mit einem Operator ⊕ durchgeführt, der wegen der homomorphen Verschlüsselung der zu bearbeitenden Daten dazu führt, dass die Berechnung mit verschlüsselten Daten durchgeführt werden kann und das verschlüsselte Ergebnis nach Entschlüsselung demjenigen entspricht, was bei der ursprünglichen Operation (bei dem Beispiel gemäß Figur 2 eine Addition) herausgekommen wäre.

Auch für die verschlüsselten codierten Daten existiert eine Rechenoperation, für die dasselbe gilt. Mit anderen Worten wird das Ergebnis, welches bei den verschlüsselten codierten Daten unter Einsatz des Operators ⊕' berechnet wird, bei einer anschließenden Entschlüsselung und nachfolgenden Dekodierung genau das Ergebnis erzielen. Somit müssen die Ergebnisse e1 und e2 an sich gleich sein.

Nach Durchführung des Berechnungsschrittes erfolgt in einem Ausgabeschritt für die Daten D_OT beim Provider PRV über die fünfte Schnittstelle S5 und einem entsprechenden Eingabeschritt D_IN beim Kunden CST eine Datenübertragung.

Der Kunde kann nun die empfangenen verarbeiteten Daten parallel im Falle des Ergebnisses v(e1) lediglich einem Entschlüsselungsschritt DCR_D mit dem Ergebnis e1 und im Falle des Ergebnisses v(c(e2)) zunächst einem Entschlüsselungsschritt DCR_D mit dem Zwischenergebnis c(e2) und anschließend einem Dekodierungsschritt DEC_D mit dem unverschlüsselten Ergebnis e2 unterziehen.

In einem nachfolgenden Vergleichsschritt für Daten CMP_de wird geprüft, ob die beiden Ergebnisse übereinstimmt. Mit anderen Worten ob gilt: E1 gleich G2. In einem nachfolgenden Erzeugungsschritt für ein Prüfungsergebnis GEN_P wird das Prüfungsergebnis Daten technisch erfasst. Hierbei kann es sich beispielsweise um einen Fehler Signal handeln, welches nur erzeugt wird, wenn der Prüfungsschritt für die Übereinstimmung des Ergebnisses CP_de ergibt, dass E1 nicht gleich E2 ist. Allerdings kann auch im Falle einer Übereinstimmung der Ergebnisse E1 und E2 ein Prüfungsergebnis erzeugt werden. Anschließend wird in einem Ausgabeschritt für das Prüfungsergebnis P_T das Prüfungsergebnis für eine weitere Verarbeitung zur Verfügung gestellt.

Sowohl für das beim Kunden CST laufende Verfahren als auch für das beim Provider PR V laufende Verfahren wird eine Abfrage bearbeitet, ob das Verfahren beendet werden soll, ist dies der Fall, wird das Verfahren beendet, ist dies nicht der Fall, so führt im Falle des Kunden CST eine Rekursionsschleife zurück zum ersten Schritt des Verfahrens und damit zur Generierung weiterer Daten und im Falle des Providers zu dem ersten Schritt einer Dateneingabe D_en über die fünfte Schnittstelle S5.

Bezugszeichenliste

| | |
|---|---|
| LZ | Leitzentrale |
| FZ | Fahrzeug |
| CLD | Cloud |
| PRV | Provider |
| CST | Kunde |
| HCP | Hostcomputer |
| CCP1 ... CCP2 | Clientcomputer |
| SE1 ... SE3 | Speichereinrichtung |
| S1 ... S5 | Schnittstelle |
| | |
| CLC | Berechnungsschritt |
| GEN_D | Erzeugungsschritt für Daten |

GEN_P    Erzeugungsschritt für Prüfungsergebnis
COD_D    Codierungsschritt für Daten
DEC_D    Decodierungsschritt für Daten
ECR_D    Verschlüsselungsschritt für Daten
DCR_D    Entschlüsselungsschritt für Daten
D_IN     Eingabeschritt für Daten
D_OT     Ausgabeschritt für Daten
CMP_D    Vergleichsschritt für Daten
P_OT     Ausgabeschritt für Prüfergebnis
STP?     Abfrageschritt für Ende

**Patentansprüche**

1. Verfahren zur rechnergestützten Datenverarbeitung in einer Rechenumgebung mit verteilten Computern, bei dem

   • von einem Clientcomputer (CC1, CC2) zu verarbeitende Daten homomorph verschlüsselt an einen Hostcomputer (HC) übertragen werden,
   • anschließend die zu verarbeitenden Daten homomorph verschlüsselt durch den Hostcomputer (HC) verarbeitet werden,
   • anschließend die verarbeiteten Daten homomorph verschlüsselt von dem Hostcomputer (HC) an den Clientcomputer übertragen werden,

   **dadurch gekennzeichnet,**
   **dass**

   • die zu verarbeitenden Daten vor dem homomorphen Verschlüsseln zusätzlich codiert werden,
   • sowohl die codierten zu verarbeitenden Daten als auch die uncodierten zu verarbeitenden Daten homomorph verschlüsselt werden und an den Hostrechner (HC) übertragen werden,
   • anschließend sowohl die codierten zu verarbeitenden Daten als auch die uncodierten zu verarbeitenden Daten homomorph verschlüsselt durch den Hostcomputer (HC) verarbeitet werden,
   • anschließend sowohl die codierten verarbeiteten Daten als auch die uncodierten verarbeiteten Daten homomorph verschlüsselt von dem Hostcomputer (HC) an den Clientcomputer (CC1, CC2) übertragen werden.

2. Verfahren nach Anspruch 1,
   **dadurch gekennzeichnet,**
   **dass**

   • sowohl die codierten verarbeiteten Daten als auch die uncodierten verarbeiteten Daten nach der Übertragung an den Clientcomputer (CC1, CC2) entschlüsselt werden und die entschlüsselten codierten Daten zusätzlich decodiert werden,
   • die entschlüsselten sowie decodierten verarbeiteten Daten und die entschlüsselten Daten auf Übereinstimmung geprüft werden.

3. Verfahren nach einem der voranstehenden Ansprüche,
   **dadurch gekennzeichnet,**
   **dass** nach der Prüfung der entschlüsselten sowie decodierten verarbeiteten Daten und der entschlüsselten Daten auf Übereinstimmung ein Prüfergebnis generiert wird.

4. Verfahren nach einem der voranstehenden Ansprüche,
   **dadurch gekennzeichnet,**
   **dass** ein Fehlersignal erzeugt wird, wenn das Prüfergebnis den Inhalt hat, dass die entschlüsselten sowie decodierten verarbeiteten Daten und die entschlüsselten Daten nicht übereinstimmen.

5. Verfahren nach einem der voranstehenden Ansprüche,
   **dadurch gekennzeichnet,**
   **dass** Daten derart codiert werden, dass für die zu verarbeitenden codierten und verschlüsselten Daten dieselben Operatoren verwendet werden können, wie für die zu verarbeitenden nur verschlüsselten Daten.

6. Verfahren nach einem der voranstehenden Ansprüche,
   **dadurch gekennzeichnet,**
   **dass** für die zu verarbeitenden codierten und verschlüsselten Daten angepasste Operatoren verwendet werden, die dasselbe Ergebnis generieren wie die jeweils zugehörigen Operatoren bei den zu verarbeitenden nur verschlüsselten Daten.

7. Streckenseitige Einrichtung (LZ) für eine Bahnanlage
   **dadurch gekennzeichnet,**
   **dass** diese einen Clientcomputer gemäß dem voranstehenden Anspruch aufweist.

8. Fahrzeug (FZ),
   **dadurch gekennzeichnet,**
   **dass** dieses einen Clientcomputer gemäß dem voranstehenden Anspruch aufweist.

9. Fahrzeug (FZ) nach Anspruch 8,
   **dadurch gekennzeichnet,**
   **dass** dieses als spurgeführtes Fahrzeug ausgeführt ist.

10. Computerprogrammprodukt, umfassend Programmbefehle, die bei der Ausführung des Programms durch einen Computer diesen dazu veranlassen, das Verfahren gemäß den Schritten, dass

- zu verarbeitende Daten vor einem homomorphen Verschlüsseln zusätzlich codiert werden,
- sowohl die codierten zu verarbeitenden Daten als auch die uncodierten zu verarbeitenden Daten homomorph verschlüsselt werden, und an den Hostrechner übertragen werden,
- anschließend sowohl die codierten verarbeiteten Daten als auch die uncodierten verarbeiteten Daten homomorph verschlüsselt von dem Hostcomputer an den Clientcomputer empfangen werden,

nach einem der Ansprüche 1 - 6 durchzuführen.

11. Computerlesbares Speichermedium, auf dem das Computerprogrammprodukt nach dem letzten voranstehenden Anspruch gespeichert ist.

# FIG 1

FIG 2

START

CST | PRV

START

GEN_D —(a+b)

COD_D

—c(a),c(b)

ECR_D          ECR_D

—v(c(a)),v(c(b))

v(a),v(b)

D_OT  →  D_IN

S5

CLC —
$v(a) \oplus v(b) = v(e1),$
$v(c(a)) \oplus' v(c(b))$
$= v(c(e2))$

S5

D_IN  ←  D_OT

DCR_D          DCR_D

—c(e2)

e1—

DEC_D

—e2

CMP_D —e1=e2

GEN_P

P_OT

STP?  −

+

END

STP?  −

+

END

Europäisches Patentamt
European Patent Office
Office européen des brevets

**EUROPÄISCHER RECHERCHENBERICHT**

**Nummer der Anmeldung**

**EP 22 18 2363**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/180115 A1 (LAINE KIM [US] ET AL) 22. Juni 2017 (2017-06-22) * Absatz [0033] – Absatz [0040] * * Abbildung 2 * ----- | 1-11 | INV. H04L9/00 |
| A | US 2021/099308 A1 (ABBAS ALI [DE]) 1. April 2021 (2021-04-01) * Zusammenfassung * ----- | 1-11 | |

**RECHERCHIERTE SACHGEBIETE (IPC)**

**H04L**

Der vorliegende Recherchenbericht wurde für alle Patentansprüche erstellt

| Recherchenort | Abschlußdatum der Recherche | Prüfer |
|---|---|---|
| München | 9. Dezember 2022 | Apostolescu, Radu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**EP 4 300 873 A1**

## ANHANG ZUM EUROPÄISCHEN RECHERCHENBERICHT
## ÜBER DIE EUROPÄISCHE PATENTANMELDUNG NR.

**EP 22 18 2363**

**09-12-2022**

| Im Recherchenbericht angeführtes Patentdokument | Datum der Veröffentlichung | Mitglied(er) der Patentfamilie | Datum der Veröffentlichung |
|---|---|---|---|
| US 2017180115 A1 | 22-06-2017 | KEINE | |
| US 2021099308 A1 | 01-04-2021 | KEINE | |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *Indian Journal of Science and Technology,* August 2016, vol. 9 (29